# EUROPÄISCHE PATENTANMELDUNG

(11) **EP 0 928 861 A1**
(43) Veröffentlichungstag der Anmeldung: **14.07.1999**
(21) Anmeldenummer: 98123995.7
(22) Anmeldetag: 17.12.1998
(51) Int. Cl.: E04D 13/08, E03B 3/02

(54) **Regenwasserfilter mit geringem Höhenversatz**

(30) Priorität: 06.01.1998 DE 19800208
(71) Anmelder: Ehlert, Ulrich, 53783 Eitorf (DE); Grüter, Torsten, 51570 Windeck (DE); Pantel, Frank, 51570 Windeck (DE)
(72) Erfinder: Ehlert, Ulrich, 53783 Eitorf (DE); Grüter, Torsten, 51570 Windeck (DE); Pantel, Frank, 51570 Windeck (DE)
(74) Vertreter: Lenzing, Andreas, Dr.

(57) **Zusammenfassung**

Die Erfindung betrifft einen Regenwasserfilter für strömendes Wasser mit einem Zulauf 1, einem Filterwasserablauf 2 und einem Schmutzwasserablauf 3, wobei zwischen dem Zulauf 1 und dem Filterwasserablauf 2 eine Siebkammer 4,10 mit einem Sieb 5,11 vorgesehen ist. Gute Trenneigenschaften bei einem geringen Höhenversatz zwischen Zulauf 1 und Filterwasserablauf 2 werden erreicht, indem in der Siebkammer 4,10 die Strömungsrichtung im wesentlichen horizontal seitlich abgelenkt wird und an der von dem Regenwasser angeströmten Außenseite der Siebkammer 4,10 ein Sieb 5,11 vorgesehen ist.

## Beschreibung

Die vorliegende Erfindung betrifft einen Filter für Feststoffe mitführendes Wasser, insbesondere einen Regenwasserfilter, mit den Merkmalen des Oberbegriffs des Anspruchs 1.

Im Stand der Technik sind zahlreiche Regenwasserfilter zum Einbau in die Fallrohre von Dachrinnen bekannt, so beispielsweise aus der US-PS 1,230,024, aus der DE 3812136 C2, aus der DE 2908620 A1, aus der DE 3518302 A1 sowie aus dem Gebrauchsmuster G7635684 U1. Bei diesen Regenwasserfiltern tritt das Schmutzwasser von oben mit großer Geschwindigkeit in den Filter ein und wird dort im wesentlichen geradeaus in Fallrichtung nach unten weitergeleitet. In einem Randbereich der bekannten Regenwasserfilter wird ein Teilstrom, der von Laub und dergleichen befreit ist, radial nach außen zu einer Zisterne oder einem Sammelbehälter geleitet.

Der nächstkommende Stand der Technik ist das deutsche Gebrauchsmuster G9304516 U1, bei dem ein Regenwasserfilter mit horizontalem, tangentialem Einlauf des Schmutzwassers in eine Filterkammer offenbart ist. In der Filterkammer wird die Schmutzfracht mit dem Restwasser zur Mitte hin geleitet, während über einen ringförmigen Spalt im Randbereich der Trennkammer von der Schmutzfracht befreites Regenwasser als Teilstrom abgeleitet wird. Bei dem bekannten Regenwasserfilter ist eine relativ große Höhendifferenz zwischen dem leicht geneigten, im wesentlichen horizontalen Zulauf und dem ebenfalls etwa horizontalen Filterwasserablauf erforderlich. Diese Höhendifferenz beträgt in der Praxis rund 30 cm. Es zeigt sich, daß dieser Höhenversatz zwischen dem Zulauf und dem Filterwasserablauf nachteilig ist, weil der maximal erreichbare Wasserpegel in der Regenwasserzisterne auf dem Niveau des Filterwasserablaufs liegt. Je höher der Filterwasserablauf angeordnet ist, desto größer kann die Füllhöhe der Zisterne gewählt werden. Bei gleichem Zisternenvolumen braucht bei geringerem Höhenversatz die Zisterne um die entsprechende Tiefe weniger in das Erdreich eingebracht werden.

Es ist daher Aufgabe der vorliegenden Erfindung, einen Filter für Feststoffe mitführendes Wasser, insbesondere einen Regenwasserfilter zu schaffen, der einen geringen Höhenversatz zwischen dem Zulauf und dem Filterwasserablauf aufweist. Diese Aufgabe wird von einem Regenwasserfilter mit den Merkmalen des Anspruchs 1 gelöst.

Weil in der Siebkammer die Strömungsrichtung im wesentlichen horizontal seitlich abgelenkt wird und an der von dem Regenwasser angeströmten Außenseite der Siebkammer ein Sieb vorgesehen ist, kann die kinetische Energie des strömenden Wassers für eine dynamische Anströmung des Siebes benutzt werden. Hierdurch ergeben sich gute Trenneigenschaften bei einem gleichzeitig guten Durchsatz, in dem das anströmende Wasser in der Geradeausrichtung auf das Sieb strömt oder prallt. Als Ergebnis ist ein Höhenversatz von wenigen Millimetern zwischen dem Zulauf und dem Filterwasserablauf erzielbar. Weil außerdem das Filterwasser in seiner bevorzugten Geradeausrichtung weitergeleitet werden kann, kann der erfindungsgemäße Regenwasserfilter mit koaxialem und parallelem Zulauf und Filterwasserablauf gefertigt werden, so daß er in eine bestehende Rohrleitung eingebunden werden kann.

Es ist von Vorteil, wenn die Siebkammer Teil einer Rinne ist, die einen teilkreisförmigen Querschnitt aufweist und deren Wandung abschnittsweise von dem Sieb gebildet ist. In dieser Rinne wird auch bei geringen Volumenströmen die Schmutzfracht stets im tiefsten Teil der Rinne gesammelt und zu dem Schmutzwasserablauf hin weggespült. Es ergibt sich eine gute Selbstreinigung des Siebes. Hierbei ist insbesondere von Vorteil, wenn das Sieb ein Spaltsieb ist, wobei die Spalte im wesentlichen in Umfangsrichtung der Siebkammer und quer zu der Strömungsrichtung angeordnet sind. Der Filterwasserablauf kann besonders einfach gestaltet werden, wenn er unterhalb des Siebes angesetzt ist und mit geringer Neigung sowie mit geringem Höhenversatz gegenüber dem Zulauf verläuft. Für kompakte Abmessungen ist es insbesondere von Vorteil, wenn der Höhenversatz zwischen dem Zulauf und dem Filterwasserablauf geringer als der Durchmesser des Zulaufs ist.

Gute Trenneigenschaften ergeben sich auch, wenn die Siebkammer schneckenförmig um den Schmutzwasserablauf herum ausgebildet ist, wobei der Radius sich in der Strömungsrichtung des Wassers verringert. Dabei steht am Anfang des Trennvorgangs für den dort großen Wasseranfall ein großer offener Siebquerschnitt zur Verfügung, während sich der Siebquerschnitt zum Schmutzwasserablauf hin verkleinert. Eine gute Ausbeute an gereinigtem Filterwasser ergibt sich, wenn der Schmutzwasserablauf in einem nicht unmittelbar angeströmten Bereich der Siebkammer angeordnet ist. Der Filter wird mit einer guten Selbstreinigungsfähigkeit ausgestattet, wenn der Schmutzwasserablauf im wesentlichen senkrecht nach unten aus der Siebkammer herausgeführt ist. Dabei wird anhaftende Schmutzfracht zuverlässig abgeführt, wenn der Schmutzwasserablauf an der Unterkante des Siebes angesetzt ist. Das Sieb ist vorzugsweise ein geschweißtes metallisches

oder aus Kunststoff gefertigtes Spaltsieb. Es ist von Vorteil, wenn das Sieb mindestens in einer Richtung, vorzugsweise aber auch in zwei Richtungen gekrümmt ist. Der Zulauf und der Filterwasserablauf sind für eine sogenannte Inline-Bauweise im wesentlichen koaxial zueinander ausgerichtet. Schließlich ist es für einen einfachen Einbau von Vorteil, wenn der Zulauf, der Filterwasserablauf und der Schmutzwasserablauf etwa den gleichen Durchmesser aufweisen.

Im folgenden werden zwei Ausführungsbeispiele der vorliegenden Erfindung anhand der Zeichnung beschrieben:

Es zeigen:
- Figur 1:: Einen Regenwasserfilter mit einfach gebogenem Spaltsieb in einem Querschnitt von oben;
- Figur 2:: den Regenwasserfilter gemäß Figur 1 in einem Querschnitt von der Seite;
- Figur 3:: den Regenwasserfilter gemäß Figur 1 und Figur 2 in Strömungsrichtung des Zulaufs; sowie
- Figur 4:: einen Regenwasserfilter mit schneckenförmiger Siebkammer in einer Draufsicht im Querschnitt.

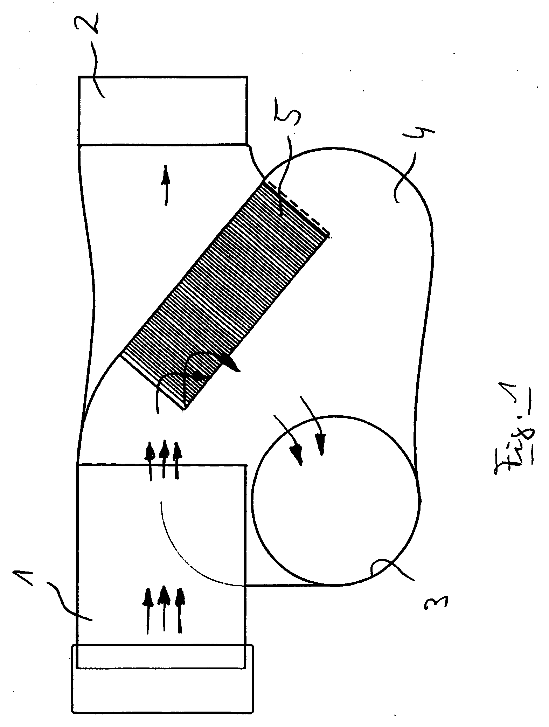

In der Figur 1 ist ein Regenwasserfilter in einer Draufsicht dargestellt. Der Regenwasserfilter trägt einen runden Zulauf 1, einen Filterwasserablauf 2 und einen Schmutzwasserablauf 3. Zwischen dem Zulauf 1 und dem Schmutzwasserablauf 3 ist eine Siebkammer 4 angeordnet, die ein Spaltsieb 5 als Teil ihrer Wandung trägt. Die Strömungsrichtungen im Zulauf 1, im Bereich des Siebes 5, in der Siebkammer 4 und im Filterwasserablauf 2 sind mit Strömungspfeilen veranschaulicht.

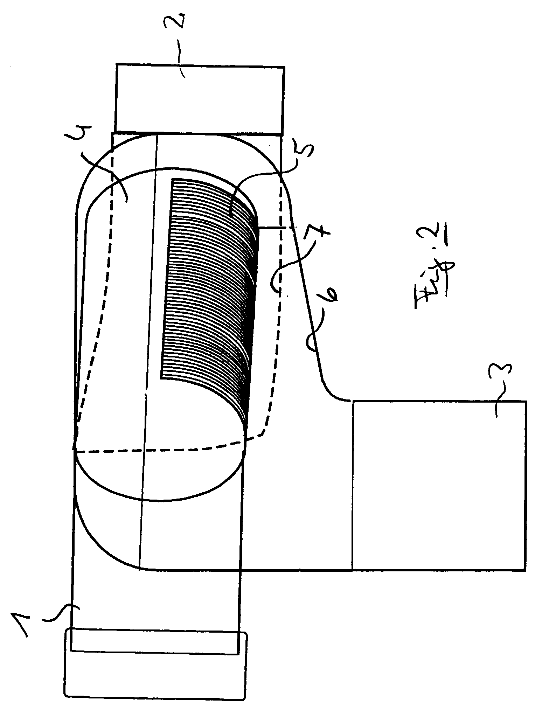

In der Figur 2 ist der Regenwasserfilter gemäß Figur 1 in einem Querschnitt von der Seite dargestellt. In dieser Ansicht ist erkennbar, daß das Sieb 5 in einer Richtung gekrümmt ist. Außerdem ist in dieser Darstellung erkennbar, daß die Siebkammer 4 unterhalb des Siebes 5 einen kontinuierlich abfallenden Bereich 6 aufweist, der in den Schmutzwasserablauf 3 mündet. In diesem Bereich 6 ist gewährleistet, daß auch bei geringem Wasseranfall die auf dem Sieb 5 abgetrennte Schmutzfracht in den Schmutzwasserablauf 3 rutscht. Mit gestrichelten Linien ist eine Sammelkammer 7 für Filterwasser angedeutet, die unmittelbar unterhalb des Siebes 5 auf dessen dem Zulauf 1 abgewandter Seite angesetzt ist. Das von der Schmutzfracht befreite Filterwasser tritt also durch das Sieb 5 hindurch und in die Sammelkammer 7 ein.

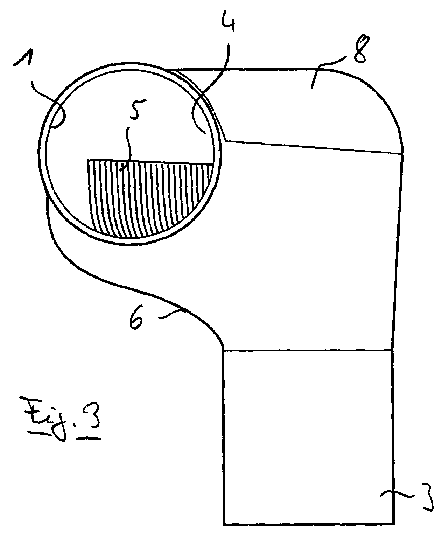

Die Figur 3 zeigt den Regenwasserfilter der Figuren 1 und 2 in einer Seitenansicht in Richtung des Zulaufs 1. Der rohrförmige Zulauf 1 läuft gerade auf das Sieb 5 zu, das von dort aus nach rechts in die Filterkammer 4 weist. Die Filterkammer 4 ist nach oben durch einen abnehmbaren Deckel 8 verschlossen. Der Deckel 8 kann zu Reinigungs- und Inspektionszwecken abgenommen werden.

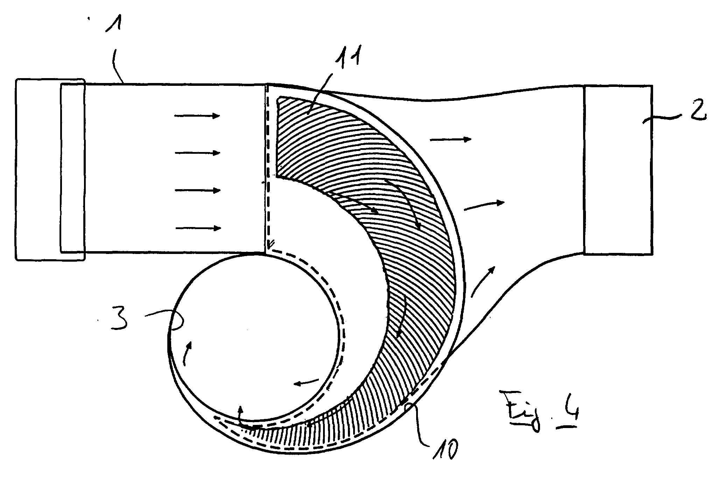

In der Figur 4 ist schließlich eine andere Ausführungsform der vorliegenden Erfindung dargestellt, bei der zwischen dem Zulauf 1, dem Filterwasserablauf 2 und dem Schmutzwasserablauf 3 eine schneckenförmige Siebkammer 10 mit einem in zwei Richtungen gekrümmten Spaltsieb 11 vorgesehen ist. Bei dieser Ausführungsform ist der offene Siebquerschnitt des Siebes 11 in dem unmittelbar dem Zulauf 1 benachbarten Bereich allein aufgrund der größeren Fläche größer und verkleinert sich in Richtung auf den Schmutzwasserablauf 3 hin. Hiermit wird der zum Schmutzwasserablauf 3 hin abnehmenden Wassermenge Rechnung getragen.

In der Praxis wird der Regenwasserfilter gemäß den Figuren 1 bis 3 mit einem Spaltsieb, genauer gesagt, einem geschweißten Spaltsieb aus metallischen Werkstoffen, versehen, wobei das Spaltsieb Spaltbreiten zwischen 200 und 500 µm, vorzugsweise 300 bis 350 µm aufweist. Die metallischen Schweißspaltsiebe werden zunächst in einer ebenen Konfiguration gefertigt und dann in einer Ebene gekrümmt. Krümmungen in zwei Ebenen sind bei metallischen Schweißspaltsieben nicht ohne weiteres möglich. Bei der Konfiguration gemäß Figur 4 kommt ein aus Kunststoff gefertigtes Sieb zum Einsatz, das ebenfalls bei Spaltbreiten in der Größenordnung von 350 µm bereits in der Fertigung in zwei Ebenen gekrümmt ist. Dieses Sieb ermöglicht etwas kompaktere Abmessungen des Regenwasserfilters, verglichen mit der Konfiguration gemäß den Figuren 1 bis 3. Der Regenwasserfilter wird mit seinem Zulauf 1 an ein Rohr angeschlossen, das Regenwasser in nicht gereinigter Form führt. Dieses Regenwasser trifft in seiner Strömungsrichtung auf das Sieb 5 bzw. 11 und wird dort bei den gezeigten Regenwasserfiltern nach rechts abgelenkt. Durch seine Massenträgheit schwappt das ungereinigte Regenwasser in der Geradeausrichtung an dem Sieb 5 hoch und beaufschlagt so einen relativ großen Bereich der Siebfläche. Von der Schmutzfracht befreites Regenwasser tritt als Filterwasser durch die Spalte des Siebes 5 bzw. 11 hindurch und tritt dann in das Filterwassersammelbecken 7 ein, von wo aus es über den Filterwasserablauf in eine Zisterne oder einen Tank geführt wird. Die im Sieb 5 bzw. 11 abgetrennte Schmutzfracht rutscht mit dem verbleibenden Regenwasser durch die Krümmung des Siebes 5 bzw. 11 zu dessen Unterkante und von dort aus über die geneigte untere Begrenzungsfläche 6 der Siebkammer 4 in den senkrecht nach unten führenden Schmutzwasserablauf 3. Für die Schmutzfracht und das Schmutzwasser ist von dem Zulauf 1 bis zum Schmutzwasserablauf 3 ein kontinuierliches Gefälle vorgesehen, das auch bei geringem Regenwasseranfall eine zuverlässige Selbstreinigung des Siebes 5 bzw. 11 gewährleistet. Auf den Sieben 5, 11 liegende Blätter und dergleichen werden sicher weggespült.

Die vorliegenden Erfindung macht sich bei dem Ausführungsbeispiel zur Erreichung guter Trenneigenschaften bei geringem Höhenversatz zwischen Zulauf 1 und Filterwasserablauf 2 die kinetische Energie des einfließenden Regenwassers zunutze, indem dieses in einem nahezu rechten Winkel quer zur Fließrichtung abgelenkt wird und dabei das Regenwasser in dem Siebbereich einen Schwall bildet. Dieser Schwall verbessert sowohl die Trenneigenschaften als auch die Selbstreinigung des erfindungsgemäßen Filters.

## Patentansprüche

1. Filter für Feststoffe mitführendes strömendes Wasser, insbesondere Regenwasserfilter, mit einem Zulauf (1), einem Filterwasserablauf (2) und einem Schmutzwasserablauf (3), wobei zwischen dem Zulauf (1) und dem Filterwasserablauf (2) eine Siebkammer (4) mit einem Sieb (5) vorgesehen ist, **dadurch gekennzeichnet,** daß in der Siebkammer (4,10) die Strömungsrichtung im wesentlichen horizontal seitlich abgelenkt wird und an der von dem Regenwasser angeströmten Außenseite der Siebkammer (4,10) ein Sieb (5,11) vorgesehen ist.

2. Vorrichtung nach Anspruch 1, **dadurch gekennzeichnet,** daß die Siebkammer (4,10) Teil einer Rinne ist, die einen teilkreisförmigen Querschnitt aufweist und deren Wandung abschnittsweise von dem Sieb (5,11) gebildet ist.

3. Vorrichtung nach einem der vorhergehenden Ansprüche, **dadurch gekennzeichnet,** daß das Sieb (5,11) ein Spaltsieb ist.

4. Vorrichtung nach einem der vorhergehenden Ansprüche, **dadurch gekennzeichnet,** daß das Sieb (5,11) Spalte aufweist, die im wesentlichen in Umfangsrichtung der Siebkammer (4,10) und quer zu der Strömungsrichtung angeordnet sind.

5. Vorrichtung nach einem der vorhergehenden Ansprüche, **dadurch gekennzeichnet,** daß der Filterwasserablauf (2) unterhalb des Siebes (5,11) angesetzt ist und mit geringer Neigung sowie geringem Höhenversatz gegenüber dem Zulauf (1) verläuft.

6. Vorrichtung nach einem der vorhergehenden Ansprüche, **dadurch gekennzeichnet,** daß der Höhenversatz zwischen dem Zulauf (1) und dem Filterwasserablauf (2) geringer als der Durchmesser des Zulaufs (1) ist.

7. Vorrichtung nach einem der vorhergehenden Ansprüche, **dadurch gekennzeichnet,** daß die Siebkammer (4,10) schneckenförmig um den Schmutzwasserablauf (3) herum ausgebildet ist, wobei der Radius sich in der Strömungsrichtung des Wassers verringert.

8. Vorrichtung nach einem der vorhergehenden Ansprüche, **dadurch gekennzeichnet,** daß der Schmutzwasserablauf (3) in einem nicht unmittelbar angeströmten Bereich der Siebkammer (4,10) angeordnet ist.

9. Vorrichtung nach einem der vorhergehenden Ansprüche, **dadurch gekennzeichnet,** daß der Schmutzwasserablauf (3) im wesentlichen senkrecht nach unten aus der Siebkammer (4,10) herausgeführt ist.

10. Vorrichtung nach einem der vorhergehenden Ansprüche, **dadurch gekennzeichnet,** daß der Schmutzwasserablauf (3) an der Unterkante des Siebes (5,11) angesetzt ist.

11. Vorrichtung nach einem der vorhergehenden Ansprüche, **dadurch gekennzeichnet,** daß das Sieb (5,11) ein geschweißtes oder aus Kunststoff gefertigtes Spaltsieb ist.

12. Vorrichtung nach einem der vorhergehenden Ansprüche, **dadurch gekennzeichnet,** daß das Sieb (5,11) in mindestens einer Richtung gekrümmt ist.

13. Vorrichtung nach einem der vorhergehenden Ansprüche, **dadurch gekennzeichnet,** daß der Zulauf (1) und der Filterwasserablauf (2) im wesentlichen koaxial ausgerichtet sind.

14. Vorrichtung nach einem der vorhergehenden Ansprüche, **dadurch gekennzeichnet,** daß der Zulauf (1), der Filterwasserablauf (2) und der Schmutzwasserablauf (3) jeweils etwa den gleichen Durchmesser aufweisen.
